(19) Europäisches Patentamt
European Patent Office
Office européen des brevets

(11) Veröffentlichungsnummer: **0 332 995 B1**

(12) **EUROPÄISCHE PATENTSCHRIFT**

(45) Veröffentlichungstag der Patentschrift: **05.05.93**

(51) Int. Cl.5: **C08L 57/00**, C08L 51/04, C08L 25/12, //(C08L25/12,55:02, 69:00),(C08L57/00,51:04,69:00), (C08L51/04,57:00,69:00)

(21) Anmeldenummer: **89103976.0**

(22) Anmeldetag: **07.03.89**

(54) **Thermoplastische Formmassen vom ABS-Typ mit hoher Zähigkeit und guter Verarbeitbarkeit.**

(30) Priorität: **17.03.88 DE 3808846**

(43) Veröffentlichungstag der Anmeldung: **20.09.89 Patentblatt 89/38**

(45) Bekanntmachung des Hinweises auf die Patenterteilung: **05.05.93 Patentblatt 93/18**

(84) Benannte Vertragsstaaten: **DE ES FR GB IT**

(56) Entgegenhaltungen: **EP-A- 0 191 942**

(73) Patentinhaber: **BAYER AG**

**W-5090 Leverkusen 1 Bayerwerk(DE)**

(72) Erfinder: **Eichenauer, Herbert, Dr.**
**Gustav-Heinemann-Strasse 3**
**W-4047 Dormagen(DE)**
Erfinder: **Leitz, Edgar, Dr.**
**Goethestrasse 63**
**W-4047 Dormagen(DE)**
Erfinder: **Ott, Karl-Heinz, Dr.**
**Paul Klee-Strasse 54**
**W-5090 Leverkusen(DE)**
Erfinder: **Pischtschan, Alfred, Dr.**
**Zur Eiche 33**
**W-5067 Kürten-Eichhof(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

ABS – Polymerisate zeichnen sich durch ein ausgewogenes Eigenschaftsbild hinsichtlich Zähigkeit, Wärmeformbeständigkeit, Verarbeitbarkeit und Oberflächenqualität aus. Bei der Herstellung von ABS – Typen mit speziellen Eigenschaften, (z.B. erhöhter Zähigkeit oder Wärmeformbeständigkeit) können die gewünschten Eigenschaften in der Regel nur bei gleichzeitigen Einbußen bei anderen Eigenschaften erreicht werden.

Ein besonderes Problem stellt die Herstellung von ABS – Polymerisaten mit sehr hoher Kerbschlagzä – higkeit dar:
Beide hierzu in der Praxis angewandten Maßnahmen a) Erhöhung des Pfropfkautschukgehalts und b) Erhöhung des Molekulargewichts des Styrol/Acrylnitril – Copolymerisats (Harzmatrix) und auch deren Kom – bination führen zu einer starken Erhöhung der Schmelzviskosität, d.h. zu einer deutlich schlechteren thermoplastischen Verarbeitbarkeit sowie damit einhergehenden Oberflächenstörungen.

Es wurde nun gefunden, daß ABS – Polymerisate mit sehr hoher Zähigkeit und gleichzeitiger ausge – zeichneter Verarbeitbarkeit durch Zusatz eines speziellen aliphatischen Polycarbonats erhalten werden.

Gegenstand der vorliegenden Erfindung sind thermoplastische Formmassen, enthaltend

A) 5 – 90 Gew. – Teile, bevorzugt 10 – 80 Gew. – Teile und besonders bevorzugt 20 – 75 Gew. – Teile, eines oder mehrerer thermoplastischer Polymerisate von Styrol, α – Methylstyrol, kernsubstituiertem Styrol, Methylmethacrylat, Acrylnitril, Methacrylnitril, Maleinsäureanhydrid, N – substituiertem Maleinimid, vinylacetat oder Mischungen daraus

B) 5 – 90 Gew. – Teile, bevorzugt 10 – 80 Gew. – Teile und besondes bevorzugt 15 – 60 Gew. – Teile, eines oder mehrerer Pfropfpolymerisate von

B.1) 5 – 90 Gew. – Teilen, vorzugweise 30 – 80 Gew. – Teilen, Styrol, α – Methylstyrol, kernsubstituier – tem Styrol, Methylmethacrylat, Acrylnitril, Methacrylnitril, Maleinsäureanhydrid, N – substituiertem Maleinimid, Vinylacetat oder Mischungen daraus auf

B.2) 95 – 10 Gew. – Teile, vorzugsweise 70 – 20 Gew. – Teile, eines Kautschuks mit einer Glastempe – ratur ≦ 10 ° C und

C) 0,25 – 40 Gew. – Teile, bevorzugt 0,5 – 30 Gew. – Teile, eines linearen aliphatischen Polycarbonats.

Die erfindungsgemäßen Mischungen aus Copolymerisat (A), Pfropfpolymerisat (B) und linearem ali – phatischem Polycarbonat (C) können die üblichen Zusatzstoffe wie Flammschutzmittel, Stabilisatoren, Entformungsmittel, Pigmente, Gleitmittel, Antistatika, Füllstoffe in den üblichen Mengen enthalten.

Durch den Zusatz des Polycarbonats C) werden Formmassen vom ABS – Typ erhalten, die neben einer hohen Zähigkeit eine verbesserte Fließfähigkeit und somit eine verbesserte Verarbeitbarkeit haben. Dies bedeutet, daß auch hochzähe großformatige Spritzgußteile bzw. solche mit komplizierter Struktur, z.B. Computergehäuse, Teile für die KFz – Industrie, aufgrund der verbesserten Fließfähigkeit leichter bzw. unter geringerer Temperaturbelastung hergestellt werden können.

Erfindungsgemäß geeignete thermoplastische Polymerisate sind solche aus Styrol, α – Methylstyrol, p – Methylstyrol, Vinyltoluol, halogenstyrol, Methylacrylat, Methylmethacrylat, Acrylnitril, Methacrylnitril, Mal – einsäureanhydrid, N – substituiertes Maleinimid oder Mischungen daraus.

Die Polymerisate A) sind harzartig, thermoplastisch und kautschukfrei. Besonders bevorzugte Polyme – risate A) sind solche aus Styrol, Methylmethacrylat, Styrol/Acrylnitril – Gemischen, Styrol/Acrylnitril/Methylmethacrylat – Gemischen, Styrol/Methylmethacrylat – Gemischen, Acrylnitril/Methylmethacrylat – Gemischen, α – Methylstyrol/ – Acrylnitril – Gemischen, Styrol – α – Methylstyrol/Acrylnitril – Gemischen, α – Methylstyrol/Methylmethacrylat/ – Acrylnitril – Gemischen, Styrol/α – Methylstyrol/Methylmethacrylat – Gemischen, Styrol/α – Methylstyrol/Methylmethacrylat/Acrylnitril – Gemi – schen, Styrol/Maleinsäureanhydrid – Gemischen, Methylmethacrylat/Maleinsäureanhydrid – Gemischen, Styrol/Methylmethacrylat/Maleinsäureanhydrid – Gemischen.

Die Polymerisate A) sind bekannt und lassen sich durch radikalische Polymerisation, insbesondere durch Emulsions – , Suspensions – , Lösungs – oder Massepolymerisation herstellen. Sie besitzen vor – zugsweise Molekulargewichte $\overline{M}_w$ von 20 000 bis 200 000 und Grenzviskositäten [η] von 20 bis 110 ml/g (gemessen in Dimethylformamid bei 25 ° C).

Zur Herstellung der Pfropfpolymerisate B) geeignete Kautschuke sind insbesondere Polybutadien, Butadien/Styrol – Copolymerisate, Butadien/Acrylnitril – Copolymerisate, Polyisopren, EPM – Kautschuke (Ethylen/Propylen – Kautschuke), EPDM – Kautschuke (Ethylen/Propylen/Dien – Kautschuke, die als Dien ein nichtkonjugiertes Dien wie z.B. Hexadien – 1,5 oder Norbornadien in kleinen Mengen enthalten) und Alkylacrylatkautschuke auf der Basis von $C_1$ – $C_8$ – Alkylacrylaten, insbesondere Ethyl – , Butyl – , Ethylhex – ylacrylat.

Die Alkylacrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Die Alkylacrylatkautschuke können auch kleinere Mengen, vorzugsweise bis zu 5 Gew.-% (bezogen auf Kautschukgewicht) vernetzend wirkender ethylenisch ungesättigter Monomerer copolymerisiert enthalten. Solche Vernetzer sind z.B. Alkylendiol-di-acrylate und -methacrylate, Polyester-di-acrylate und -methacrylate, Divinylbenzol, Trivinylbenzol, Triallylcyanurat, Allylacrylat, Allylmethacrylat, Butadien und Isopren. Acrylatkautschuke als Pfropfgrundlage können auch Kern/Mantel-Copolymerisate sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Bevorzugte Kautschuke zur Herstellung der Pfropfpolymerisate B) sind Dien- und Alkylacrylatkautschuke.

Die Kautschuke liegen im Pfropfpolymerisat B) in Form wenigstens partiell vernetzter Teilchen eines mittleren Teilchendurchmessers von 0,05 bis 20,0 µm, bevorzugt von 0,1 bis 2,0 µm und besonders bevorzugt von 0,1 bis 0,8 µm vor. Hierbei bedeutet mittlerer Teilchendurchmesser immer den mittleren Teilchendurchmesser $d_{50}$, ermittelt durch Ultrazentrifugenmessungen nach W. Scholtan et al., Kolloid-Z, u.Z. Polymere 250 (1972), 782-796.

Die Pfropfpolymerisate B) werden durch radikalische Pfropfpolymerisation der eingangs definierten Monomeren)gemische) B.1) in Gegenwart der Kautschuke B.2) hergestellt.

Bevorzugte Herstellungsverfahren für die Pfropfpolymerisate B) sind Emulsions-, Lösungs-, Masse- oder Suspensionspolymerisation sowie Kombinationen aus diesen Verfahren. Besonders bevorzugte Pfropfpolymerisate B) sind die sogenannten ABS-Polymerisate.

Die linearen aliphatischen Polycarbonate C) sind Verbindungen der allgemeinen Formel (I)

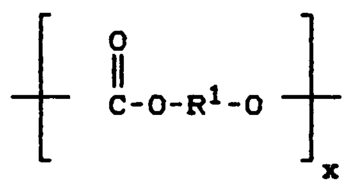

(I)

worin

$R^1$ = $-(CH_2)_n$ mit n = 3-12,
$-CH_2CH_2CH(CH_3)-$,
$-CH_2CH_2OCH_2CH_2-$,
$-CH_2CH_2OCH_2CH_2OCH_2CH_2-$,
$-CH_2CH(CH_3)CH_2CH_2C(CH_3)_2CH_2-$,

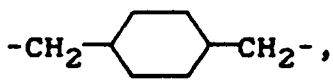, 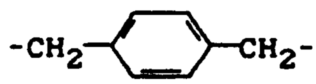,

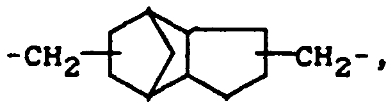

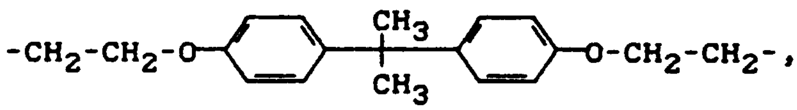

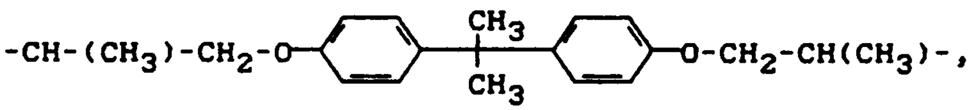

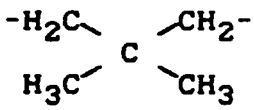, 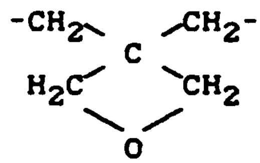,

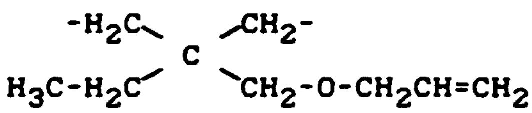, 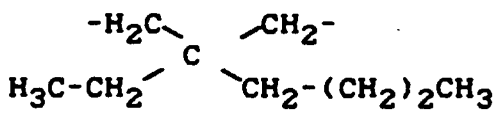

x = ganze Zahl entsprechend einem Molekulargewicht von 2000 bis 500 000

bedeutet.

Bevorzugtes aliphatisches Polycarbonat C) ist Polyneopentylglykolcarbonat mit der wiederkehrenden Struktureinheit (II)

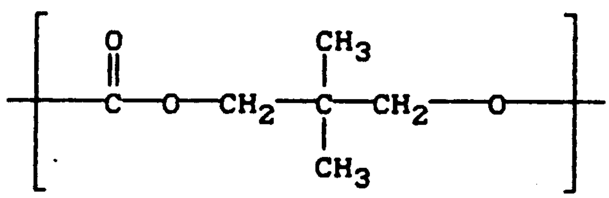 (II)

Die aliphatischen Polycarbonate C) können nach üblichen Methoden, z.B. durch Umesterung oder Phosgenierung von Diolen (DE-OS 2 001 091, FR-PS 1 391 512, DE-OS 1 031 512, DE-OS 2 446 107, DE-OS 2 605 024, EP 002 641, DE-OS 2 447 349), besser aber durch ringöffnende Masse-oder Lösungspolymerisation von cyclischen aliphatischen Carbonaten hergestellt werden (DE-OS 1 545 116, 1 545 117, 3 103 135, 3 204 078).

Das bevorzugte Herstellungsverfahren ist die anionische ringöffnende Lösungspolymerisation von cyclischen aliphatischen Carbonaten bei tiefen Temperaturen gemäß DE-OS 3 607 625.

Cyclische aliphatische Carbonate für die Herstellung der aliphatischen Polyarbonate C) sind Verbindungen der Formel (III)

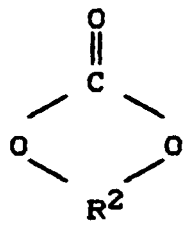

(III)

worin

$R^2$ = $-(CH_2)_n-$ mit n = 3 − 12
$-CH_2CH_2CH(CH_3)-$,
$-CH_2CH_2OCH_2CH_2-$,
$-CH_2CH_2OCH_2CH_2OCH_2CH_2-$,
$-CH_2CH(CH_3)CH_2CH_2C(CH_3)_2CH_2-$,

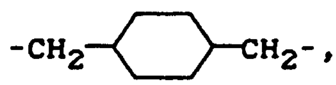

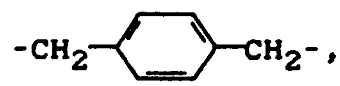

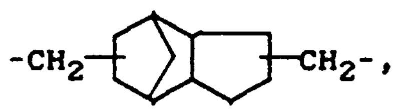

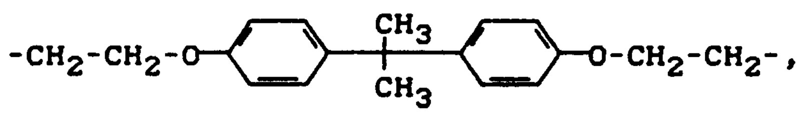

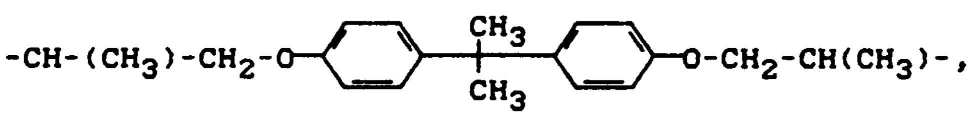

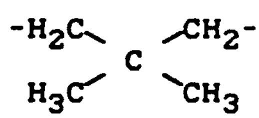

,

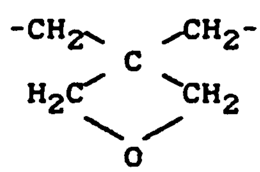

,

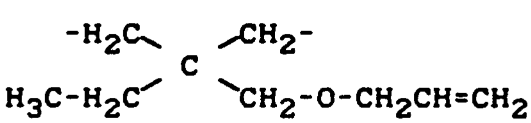

,

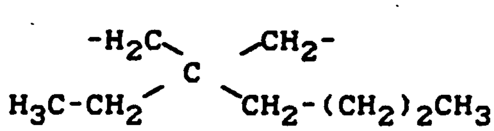

bedeutet und Verbindungen der Formel (IV)

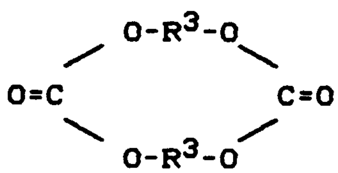

(IV)

$R^3$ = $-(CH_2)_n-$ mit n = 4 − 12
$-CH_2CH_2OCH_2CH_2-$

$-CH_2CH_2OCH_2CH_2OCH_2CH_2-$

Bevorzugt werden Carbonate der Formel (III) verwendet. Besonders bevorzugt ist das Carbonat mit

$R^2$ =

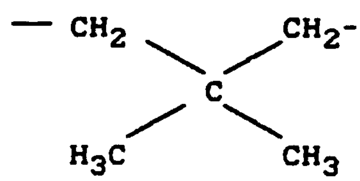

Bevorzugte aliphatische Polycarbonate C) sind die gemäß DE-OS 3 607 625 erhaltenen Produkte mit Molekulargewichten $\overline{M}_w$ im Bereich von 2000 bis 500 000, bevorzugt von 15 000 bis 350 000.

Die erfindungsgemäßen Mischungen, enthaltend die Komponenten A), B) und C) und gegebenenfalls die üblichen Zusatzstoffe wie Flammschutzmittel, Gleitmittel, Stabilisatoren, Pigmente, Entformungsmittel, Antistatika, Füllstoffe werden hergestellt, indem man die jeweiligen Bestandteile in bekannter Weise simultan oder sukzessive bei Zimmertemperatur oder bei höherer Temperatur vermischt und danach bei 150°C bis 300°C in gebräuchlichen Aggregaten wie Innenknetern, Extrudern oder Doppelwellenschnecken schmelzcompoundiert oder schmelzextrudiert.

Die Formmassen der vorliegenden Erfindung können zur Herstellung von Formkörpern jeder Art verwendet werden, wobei übliche Herstellungsweisen benutzt werden können, insbesodnere können Formkörper durch Spritzguß hergestellt werden.

Eine weitere Form der Verarbeitung der erfindungsgemäßen Formmassen ist die Herstellung von Formkörpern durch Tiefziehen aus voher nach bekannten Verfahren hergestellten Platten oder Folien.

Beispiel

Thermoplastiches Polymerisat (A)

A 1: Statistisches Styrol/Acrylnitril - Copolymerisat (Gewichtsverhältnis Styrol: Acrylnitril 72:28) mit einem Molekulargewicht $\overline{M}_w$ von ca. 115 000 und einer molekularen Uneinheitlichkeit $\overline{M}_w/\overline{M}_n - 1 \leq 2{,}0$.

A 2: Statistisches $\alpha$-Methylstyrol/Acrylnitril - Copolymerisat (Gewichtsverhältnis $\alpha$-Methylstyrol: Acrylnitril = 70:30) mit einem Molekulargewicht $\overline{M}_w$ von ca 75 000 und einer molekularen Uneinheitlichkeit $\overline{M}_w/\overline{M}_n - 1 \leq 2{,}0$.

Pfropfpolymerisat (B)

Pfropfprodukt erhalten durch Emulsionspolymerisation von 50 Gew.-% eines Styrol/Acrylnitril-Gemisches (Gew.-Verhältnis 72:28) auf 50 Gew.-% teilchenförmiges Polybutadien mit einem mittleren Teilchendurchmesser ($d_{50}$) von 0,4 $\mu$m.

Polycarbonat (C)

Aliphatisches Polycarbonat auf Basis von Neopentylglycol (2,2-Dimethylpropandiol (1,3)) erhalten durch ringöffnende anionische Polymerisation von Neopentylglykolcarbonat, mit einer relativen Lösungsviskosität $\eta_{rel}$ von 3,17 (2 Gew.-%ige Lösung in $CH_2Cl_2$ bis 20°C).

(A), B), C) wurden zusammen mit 0,1 Gew.-Teilen eines Silikonöls auf einem 1,3 l-Innenkneter bei Temperaturen zwischen 160° und 200°C compoundiert. Die Formkörper wurden auf einer Spritzgießmaschine bei 240°C hergestellt.

Die Kerbschlagzähigkeit ($a_k$) wurde bei Zimmertemperatur nach DIN 53 453 (Einheit: kJ/$m^2$) ermittelt, die Verarbeitbarkeit durch Messung des Volumen-Fließindex MVI nach DIN 53 735 U (Einheit: $cm^3$ /10 min.) sowie des notwendigen Fülldruckes (siehe F. Johannaber, Kunststoffe 74 (1984), 1, Seiten 2-5).

In Tabelle 1 sind die Zusammensetzungen der untersuchten Formmassen sowie die erhaltenen Prüfdaten zusammengestellt. Gegenüber den Vergleichsversuchen besitzen die erfindungsgemäßen Formmassen niedrigere Fülldruckwerte bzw. höhere MVI-Werte sowie deutlich erhöhte Zähigkeit.

**Tabelle 1** Zusammensetzungen und Prüfdaten der Formmassen

| Beispiel | A 1 Gew.-Teile | A 2 Gew.-Teile | B Gew.-Teile | C Gew.-Teile | $a_k$ $kJ/m^2$ | MVI | Füll-druck (240° C) bar |
|---|---|---|---|---|---|---|---|
| 1. (erfindungsgemäß) | 60 | -- | 40 | 2 | 19,3 | 8,1 | 368 |
| 2. (erfindungsgemäß) | 55 | -- | 40 | 5 | 21,5 | 8,7 | 355 |
| 3. (erfindungsgemäß) | 50 | -- | 40 | 10 | 25,0 | 12,3 | 337 |
| 4. (erfindungsgemäß) | 45 | -- | 40 | 15 | 22,0 | 15,9 | 319 |
| 5. (Vergleich) | 60 | -- | 40 | -- | 17,1 | 7,2 | 375 |
| 6. (erfindungsgemäß) | -- | 70 | 30 | 2 | 13,2 | 2,1 | 451 |
| 7. (Vergleich) | -- | 70 | 30 | -- | 13,0 | 1,9 | 469 |

## Patentansprüche

1. Thermoplastische Formmassen enthaltend

A) 5 – 90 Gew. – Teile eines oder mehrerer thermoplastischer Polymerisate von Styrol, α – Methyl – styrol, kernsubstituiertem Styrol, Methylmethacrylat, Acrylnitril, Methacrylnitril, Maleinsäureanhydrid, N – substituiertem Maleinimid, Vinylacetat oder Mischungen daraus

B) 5 – 90 Gew. – Teile eines oder mehrerer Pfropfpolymerisate von

B.1) 5 – 90 Gew. – Teilen Styrol, α – Methylstyrol, kernsubstituiertem Styrol, Methylmethacrylat, Acrylnitril, Methacrylnitril, Maleinsäureanhydrid, N – substituiertem Maleinimid, Vinylacetat oder Mischungen daraus auf

B.2) 95 – 10 Gew. – Teile eines Kautschuks mit einer Glastemperatur ≦ 10 ° C und

C) 0,25 – 40 Gew. – Teile eines linearen aliphatischen Polycarbonats.

**2.** Thermoplastische Formmassen nach Anspruch 1, enthaltend als Komponente C) ein durch anionische ringöffnende Polymerisation hergestelltes lineares aliphatisches Polycarbonat.

**3.** Thermoplastische Formmassen nach Anspruch 1, enthaltend als Komponente C) Polyneopentylglykol – carbonat.

## Claims

**1.** Thermoplastic moulding compounds containing

A) 5 – 90 parts by weight of one or more thermoplastic polymers of styrene, α – methylstyrene, styrene substituted in the ring, methylmethacrylate, acrylonitrile, methacrylonitrile, maleic anhydride, N – substituted maleimide, vinyl acetate or mixtures thereof

B) 5 – 90 parts by weight of one or more graft copolymers of

B.1) 5 – 90 parts by weight of styrene, α – methylstyrene, styrene substituted in the ring, methylmethacrylate, acrylonitrile, methacrylonitrile, maleic anhydride, N – substituted maleimide, vinyl acetate or mixtures thereof

B.2) 95 – 10 parts by weight of a rubber with a glass transition temperature of ≦ 10 ° C and

C) 0.25 – 40 parts by weight of a linear aliphatic polycarbonate.

**2.** Thermoplastic moulding compounds according to Claim 1, containing as component C), a linear aliphatic polycarbonate prepared by anionic ring – opening polymerisation.

**3.** Thermoplastic moulding compounds according to Claim 1, containing as component C), polyneopen – tylglycolcarbonate.

## Revendications

**1.** Mélanges à mouler thermoplastiques, contenant

A) 5 à 90 parties en poids d'un ou plusieurs polymères thermoplastiques de styrène, d'α – méthylstyrène, de styrène substitué sur le noyau, de méthacrylate de méthyle, d'acrylonitrile, de méthacrylonitrile, d'anhydride d'acide maléique, de maléimide substitué sur l'azote, d'acétate de vinyle ou de plusieurs de ces monomères

B) 5 à 90 parties en poids d'un ou plusieurs produits de polymérisation de greffage de

B.1) 5 à 90 parties en poids de styrène, d'α – méthylstyrène, de styrène substitué sur le noyau, de méthacrylate de méthyle, d'acrylonitrile, de méthacrylonitrile, d'anhydride d'acide maléique, de maléimide substitué sur l'azote, d'acétate de vinyle ou de plusieurs de ces monomères sur

B.2) 95 à 10 parties en poids d'un caoutchouc ayant une température de transition vitreuse inférieure ou égale à 10 ° C et

C) 0,25 à 40 parties en poids d'un polycarbonate aliphatique linéaire.

**2.** Mélanges à mouler thermoplastiques suivant la revendication 1, contenant comme composant C) un polycarbonate aliphatique linéaire produit par polymérisation anionique décyclisante.

**3.** Mélanges à mouler thermoplastiques suivant la revendication 1, contenant comme composant C) un polymère de carbonate de néopentylglycol.